# EUROPEAN PATENT SPECIFICATION

(11) **EP 0 650 606 B1**
(45) Date of publication and mention of the grant of the patent: **15.12.1999**
(21) Application number: 94905777.2
(22) Date of filing: 02.02.1994
(51) Int. Cl.: G02B 27/00, G02B 27/44

(54) **OPTICAL INSTRUMENT AND OPTICAL ELEMENT THEREOF**
OPTISCHES INSTRUMENT UND OPTISCHES ELEMENT DAFÜR
INSTRUMENT OPTIQUE ET SON ELEMENT OPTIQUE

(30) Priority: 17.05.1993 GB 9310077
(43) Date of publication of application: 03.05.1995
(73) Proprietor: FREEMAN, Robin John, Worplesdon, Surrey GU3 3QE (GB)
(72) Inventor: FREEMAN, Robin John, Worplesdon, Surrey GU3 3QE (GB)
(74) Representative: Cooke, William Douglas
(86) International application number: GB9400195
(87) International publication number: WO9427177

(56) References cited:
- EP-A- 0 463 888
- DD-A- 210 131
- FR-A- 2 217 718
- GB-A- 1 586 701
- US-A- 4 225 215
- US-A- 4 927 262

## Description

This invention relates to optical instruments and in particular to optical instruments having an exit pupil to which an image of an object may be viewed by an observer.

In conventional optical instruments the exit pupil is of relatively small dimension. Consequently it is necessary for an observer to accurately align the entrance pupil of his eye with the exit pupil of the optical instrument in order properly to view the image or otherwise receive light from the instrument.

It would be an advantage if the necessity for an observer to accurately align the entrance pupil of his eye with a relatively small exit pupil of the instrument were removed by providing the optical instrument with an enlarged exit pupil. The observer would then be able to enjoy the freedom to receive such images or light by placing his eye pupil anywhere within an enlarged exit pupil. However the size of the exit pupil of conventional optical instruments is determined by a function of numerical aperture of the instrument and the overall magnification of the instrument and hence the size of the exit pupil is of fixed and relatively small dimension.

EP-0 463 888-A2 discloses an optical display unit for viewing an indicator. An image of the indicator is formed on a hologram whereby reflected and diffracted light from the hologram is emitted toward a viewing position for the indicator. The hologram forms an image at a plurality of spots around the eyes of the observer so that the observer can see the image in the observer's field of view even if the observer moves his eyes to some extent.

GB 1,586,701 discloses an optical system having an element comprising two flat discs each grooved in one surface. The grooves form two cylindrical lenses orthogonal to one another. The orthogonal lenses enlarge the pupil in two orthogonal directions but provide only an incomplete field. The discs are rotated and in a full rotation of the discs substantially the full field area is visible to an observer for a part of the rotation. With sufficiently high speed of rotation of the discs, persistence of vision results in an effectively full field of view being received which can be viewed from a range of eye positions. However at any eye position, only a portion of light from an object is received at any time

According to one aspect of the invention an optical instrument including means to produce an optical image to be viewed by an observer at an enlarged exit pupil comprising an array of a plurality of exit pupils; the means to produce the array of the plurality of exit pupils comprising a diffractive element located at an intermediate focal or image plane of the optical instrument is characterised in that the diffractive element comprises a surface of a substrate; a plurality of parallel first grooves in said surface; a plurality of parallel second grooves in said surface of said substrate; said second grooves extending perpendicularly relative to said first grooves; adjacent edges of said first grooves being coincident and forming first lines of a first optical diffractive grating and adjacent edges of said second grooves being coincident and forming second lines of a second optical diffractive grating thereby producing the enlarged exit pupil as a two dimensional array of exit pupils.

According to a second aspect of the invention a diffractive element of an optical instrument comprises a substrate having a surface; a plurality of parallel first grooves in said surface, adjacent edges of said first grooves being coincident and forming first lines of a first optical diffractive grating; a plurality of parallel second grooves in said surface of said substrate, adjacent edges of said second grooves being coincident and forming second lines of a second optical diffractive grating; said diffractive element being characterised by said first lines of said first optical diffractive grating extending perpendicularly relative to said second lines of said second optical diffractive grating.

An embodiment of the invention will now be described by way of example with reference to the drawings in which:-
Figure 1 shows optical elements of a microscope incorporating a diffractive element,
Figure 2 shows an array of exit pupils produced by the microscope of Figure 1,
Figure 3 shows optical elements of a projection microscope utilising a transmissive diffractive element,
Figure 4 shows an alternative form of projection microscope using a reflective diffractive element.
Figure 5 shows a diffractive array on an optical element,
Figure 6 is a sectional view on line 6 - 6 of Figure 5,
Figure 7 is a sectional view on line 7 - 7 of Figure 5,
Figures 8 and 9 are sectional views corresponding to Figures 6 and 7 respectively illustrating an alternative construction of a diffractive array on an optical element,
Figure 10 shows an optical element comprising a combined Fresnel lens system and diffractive array,
Figure 11 and 12 are sectional views on lines 11 - 11 and 12- 12 respectively of Figure 10, and
Figure 13 shows the optical elements of a projection microscope utilising a combined Fresnel lens system and diffractive array.

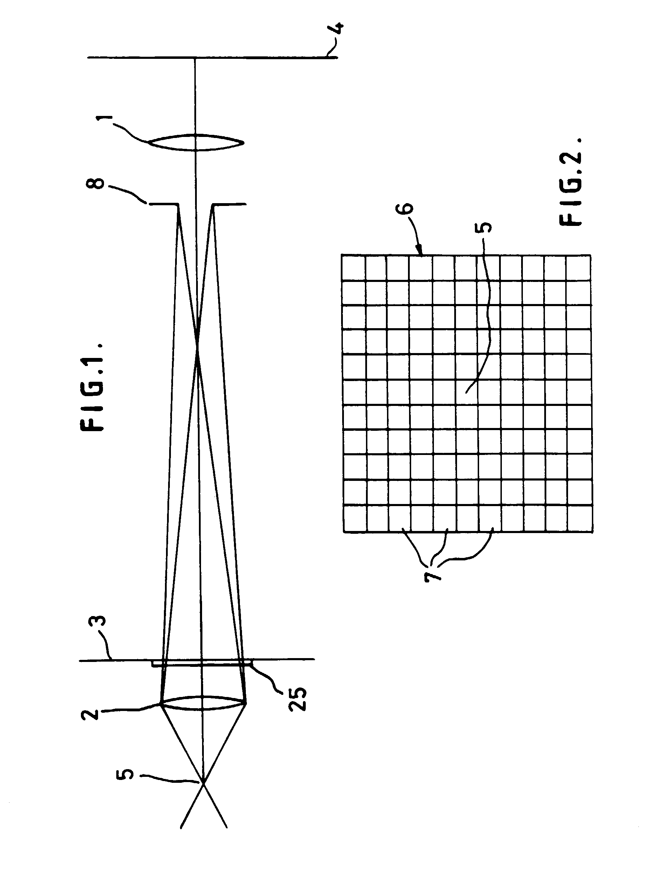

Referring first to Figure 1, a microscope includes an objective lens 1 and an eyepiece 2. The objective lens produces an intermediate image in a focal or image plane 3 of an object in an object plane 4 and, as is well known, when an eye of an observer is aligned with an exit pupil 5 of the microscope a magnified image of the intermediate image and hence of the object may be observed. The exit pupil 5 is an image of the aperture of the objective lens 1. In the microscope in accordance with the invention a transmissive diffractive element is located at the intermediate focal or image plane 3 of the microscope. The diffractive element is effective to cause the microscope to produce an array 6 (Figure 2) of exit pupils 7 each corresponding to the exit pupil 5 which would be formed in the absence of the diffractive element 3. By suitable choice of design of the diffractive element to produce the array 7 of exit pupils, this array of exit pupils may be such that adjacent exit pupils 5, 7 are spaced apart or in contact.

If desired the aperture of the object lens may be defined by an aperture stop 8. The aperture stop 8 may be circular and the exit pupil will then also be circular. However the aperture may be of a shape which is not circular and for example may be rectangular, square or hexagonal. Accordingly the exit pupils 5, 7 are produced with a corresponding shape which may, if desired, be such that the exit pupils of the array can be located contiguous to one another with no gaps therebetween and no overlapping thereof, the exit pupils may be spaced apart or may overlap to a small extent. However it will be appreciated that the location of the exit pupils relative to one another is chosen such that the array of exit pupils appears to the eye of an observer as a single continuous enlarged exit pupil. If the spacing of the exit pupils in the array is too large the array will not appear to an observer as a continuous enlarged exit pupil resulting in a loss of numerical aperture and therefore of resolution ability of the instrument.

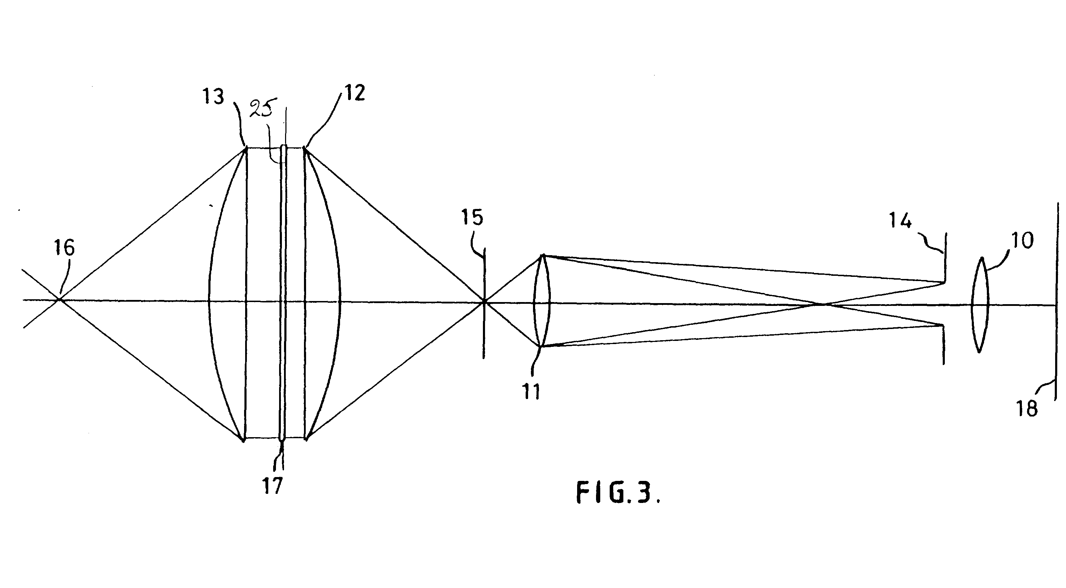

Figure 3 shows a projection microscope including an objective lens 10, a projection eyepiece 11 and field lenses 12, 13. In this construction of projection microscope the projection eyepiece images the aperture of the object lens 10 or, if provided, of an aperture stop 14 to form an intermediate exit pupil at an intermediate plane 15. The field lenses 12, 13 relay an image of the intermediate exit pupil at plane 15 to a final exit pupil 16 at a viewing position for an observer. The objective lens 10 and the projection eyepiece 11 form an image in a plane 17 intermediate the field lenses 12, 13 of an object in an object plane 18. A transmissive diffractive element 25 is located in the plane 17 to produce an array of images of the intermediate exit pupil in plane 15 such as to form an enlarged final exit pupil 16 at the viewing position.

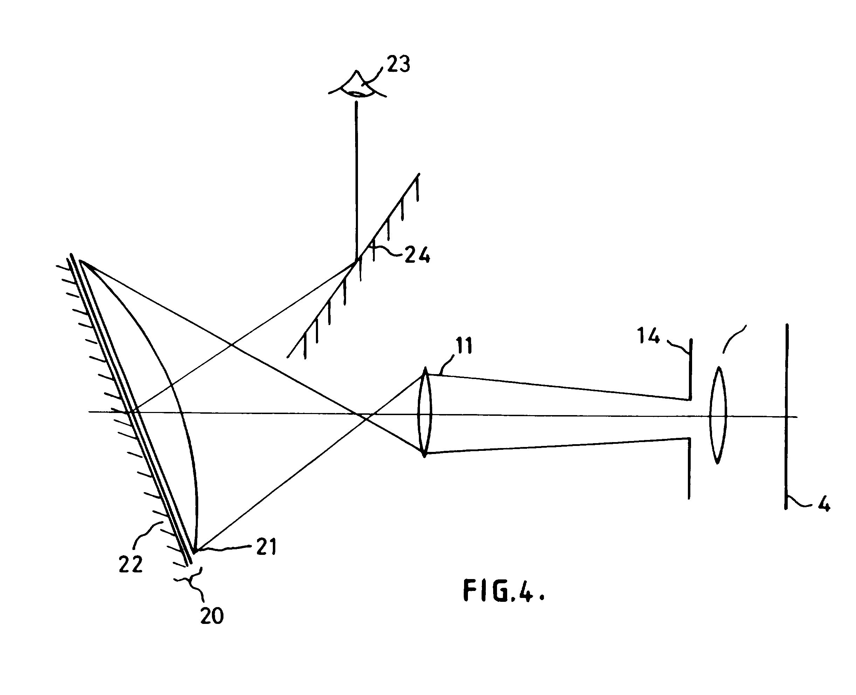

Figure 4 shows a further embodiment of projection microscope in which, instead of forming an image at a transmissive diffractive element as in the microscope shown in Figure 1 and the projection microscope shown in Figure 3, the image is formed at a reflective diffractive element 20. A single field lens 21 and a reflective element 22 is provided to form an image for viewing by an eye 23 of an observer via a mirror 24. Instead of providing a field lens 21 and a planar reflective element 22, a concave part-spherical reflective element may be provided. A diffractive element 25 is provided adjacent the surface of the reflective element 22. The diffractive element 25 may be a separate element or may be integral with the reflective element 22 and be formed on the reflective surface of the reflective element 22. Instead of a field lens 21 and planar mirror 22, a concave part-spherical reflective element may be provided. The diffractive element may be integral with the concave reflective element and be formed on the part-spherical concave surface of the reflective element so that the diffractive element has the form of curvature of the surface of the reflective element.

While as shown in Figure 2, a two dimensional array of exit pupils is produced to form a continuous enlarged exit pupil it will be appreciated that for some purposes enlargement of one dimension of the exit pupil is sufficient in which case the diffractive element is formed to produce a linear array of exit pupils and the exit pupils may be spaced apart or contiguous.

Thus it will be understood that the invention provides an optical instrument including an optical element which, when located at an intermediate image plane of the optical instrument, produces by reflective or refractive diffractive means together with an associated field lens or mirror system, an array of exit pupils, or images of intermediate exit pupils, of the instrument at the viewing position for an eye of an observer.

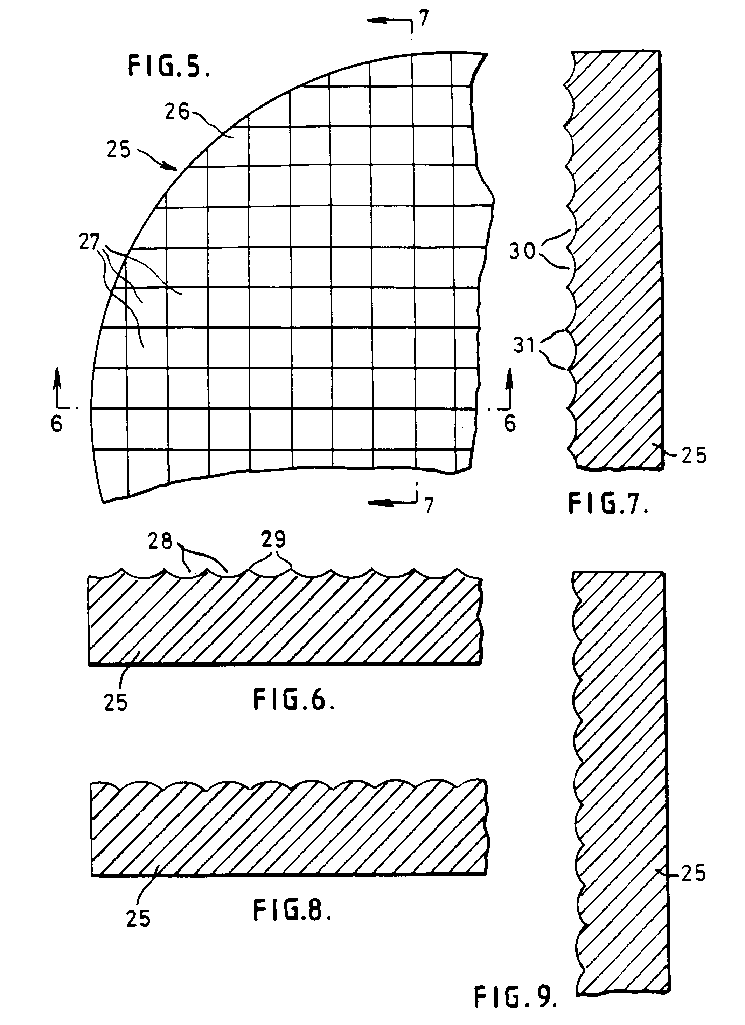

Referring to Figures 5, 6 and 7, one form of diffraction element 25 comprises a surface 26 having an array of diffractive sub-elements 27 and the size of these sub-elements in conjunction with the field lens or reflective element system determines the separation of adjacent pupil images formed at the viewing position. The profile and form of each of the individual sub-elements determines the comparative light energy levels within each of the individual pupil images. The diffraction element 25 has a plurality of parallel first grooves 28 (Figure 6) in the surface 26 thereof such that common parallel first edges 29 between the first grooves 28 act as a first diffractive grating. The diffraction element 25 also has a plurality of parallel second grooves 30 (Figure 7) in the surface 26 thereof extending perpendicular to the first grooves 28 and common parallel second edges 31 between adjacent second grooves 30 act as a second diffractive grating having an orientation perpendicular to that of the first grating. The spacing, i.e. the pitch, of adjacent common first edges 29 determines the spacing of the exit pupils in a first direction and the spacing or pitch of adjacent common second edges 31 determines the spacing of the exit pupils in a second direction perpendicular to the first direction. Typically the pitch of the edges 29, 31 may be in the range of 80 - 160 microns. The angle and form of the wall of the grooves 28, 30 determine the dispersion of light to the plurality of exit pupils and the wall of the grooves is formed such as to produce a substantially uniform dispersion of light to the plurality of exit pupils. Instead of forming grooves in the surface 26 such that the edges 29, 31 forming a diffractive grating lie uppermost at the surface with the grooves forming troughs between the edges as shown in Figures 6 and 7, the element may be formed with an inverse formation such that diffraction lines 32, 33 are defined by deepest parts of grooves formed in the element.

The spacing of the edges or lines forming the first and second diffractive gratings may be equal or if desired the spacing of lines or edges of one grating may be greater than the spacing of lines or edges of the other grating. Also, the cross sectional form of all of the grooves of one grating may be substantially the same or, if desired, the cross sectional form of each groove or of some grooves relative to an adjacent groove may vary to provide a required distribution of light to the exit pupils.

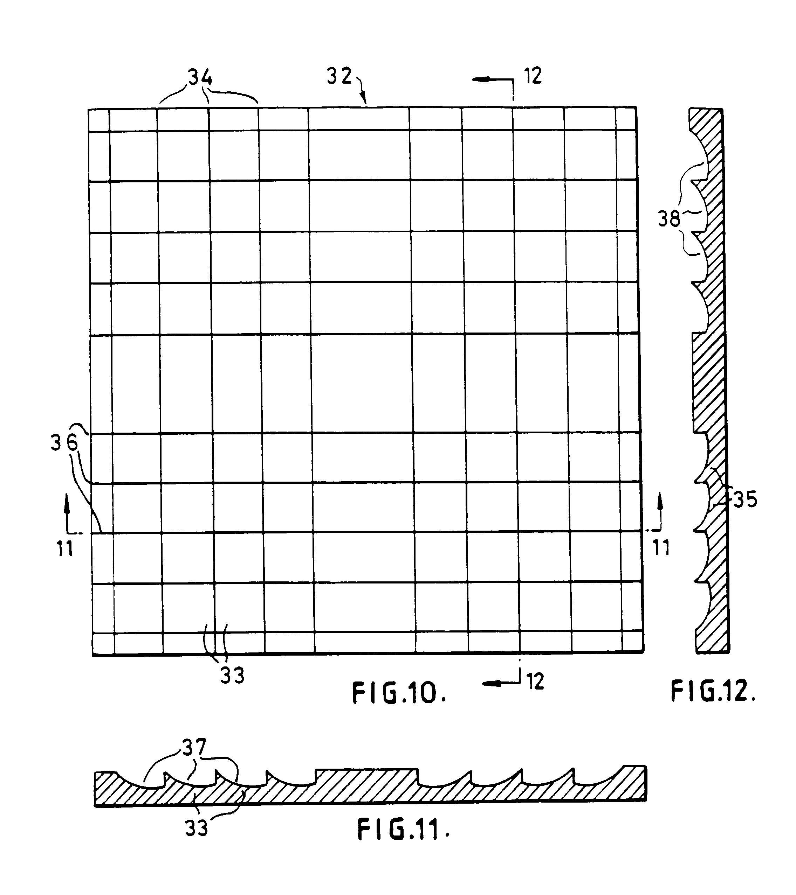

In the construction of microscope illustrated in Figure 3 in which field lenses 12, 13 are provided to project the image and in the construction of microscope illustrated in Figure 4 in which a mirror and a field lens 21 are provided to project the image, the field lenses need to be at least as large as the image field. This presents disadvantages in respect of cost and weight of the instrument and where larger fields of view are required it becomes impractical to manufacture the size of field lenses required. In order to overcome these disadvantages Fresnel lenses may be utilised in place of the refractive field lenses. Referring to Figure 10, a Fresnel lens system and diffractive element manufactured as an integral element 32 will now be described. Usually a circular Fresnel lens comprises a plurality of concentric prismatic rings which in combination act optically in a similar manner to a refractive lens. However in the present embodiment instead of forming a conventional circular Fresnel lens the required optical characteristic of a circular Fresnel lens is provided by means of two mutually perpendicular cylindrical Fresnel lenses. A first cylindrical Fresnel lens is formed as a first pattern of parallel prismatic strips 33 defined by parallel lines 34 and a second cylindrical Fresnel lens is formed as a second pattern of parallel prismatic strips 35 defined by lines 36. The strips 33 of the first pattern extend perpendicular to the strips 35 of the second pattern and hence the first and second cylindrical Fresnel lenses formed by the strips are mutually perpendicular. The first and second cylindrical Fresnel lenses in combination act optically as a conventional circular lens. As described hereinbefore a pattern of two mutually perpendicular sets of parallel lines is utilised to generate an array of exit pupils and similarly the pattern of parallel lines forming the first and second Fresnel lenses is utilised to generate an array of exit pupils. The surfaces of the prismatic strips forming the Fresnel lenses are modified as compared with a conventional Fresnel lens. In a conventional Fresnel lens, the surface of each ring or strip is linear in a radial direction of the ring or, in respect of a strip, in a transverse direction of the strip whereas in the present embodiment, in order to provide substantially uniform distribution of light energy to the exit pupils of an array of exit pupils generated by the first and second Fresnel patterns, inclined surfaces 37, 38 of the strips 33, 35 respectively are curved as indicated in Figures 11 and 12. The curvature of the surface of the strips may be either positive or negative. Thus each strip may have a concave inclined surface 37, 38 as shown in Figures 11 and 12, or may have a convex inclined surface, the curvature of the surface being such as to provide the required substantially uniform distribution of light energy to the array of exit pupils.

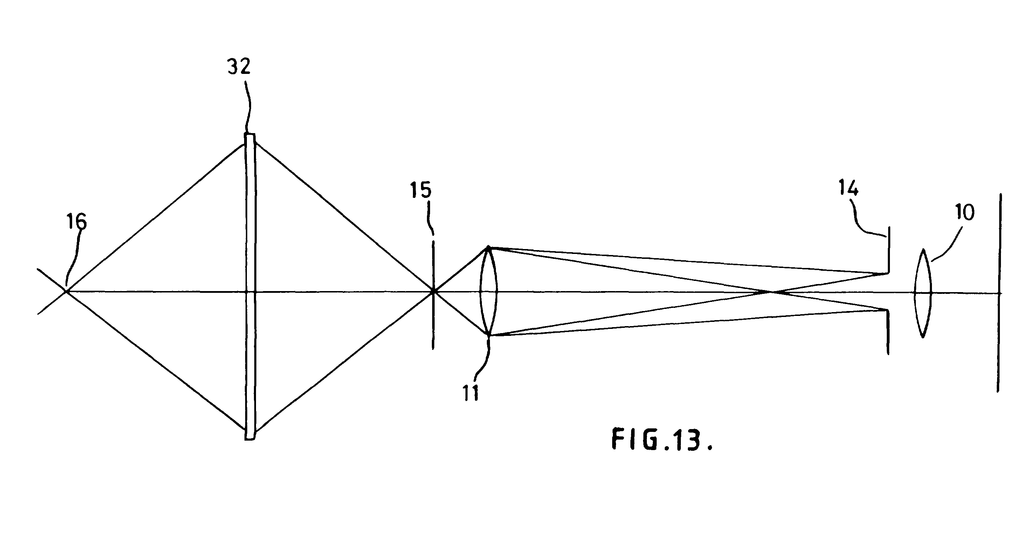

Figure 13 is similar to Figure 3 and illustrates a projection microscope but a single optical element 32 performs the functions of the field lens system 12, 13 (Figure 3) and of the diffractive element 25 (Figure 3) to generate an array of a plurality of exit pupils. Such an element is of less weight and may be manufactured economically.

It is preferred to form the first and second cylindrical Fresnel lenses in a common surface of a substrate but if desired the first and second cylindrical Fresnel lenses may be formed on different surfaces which in the microscope extend parallel to one another. For example, one lens pattern may be formed on one surface of a substrate and the other lens pattern may be formed on an opposite surface of the substrate. It will be appreciated that the lens pattern formed in the surface of the substrate may be an inverse pattern in the same manner as described hereinbefore with reference to the patterns of Figures 5 to 9.

It is envisaged that usually the diffractive element would remain stationary relative to the other optical elements of the optical instrument. However in some instances it may be desirable to move the diffractive element relative to the other optical elements of the optical instrument for example by rotation of the diffractive element about an axis perpendicular to the plane of the element, or in the case of a concave part-spherical element, about a central axis of the element. Such rotation may be effected by providing an electric motor and a drive transmission from the motor to the diffractive element.

Hereinbefore the invention has been described in relation to microscopes however it is to be understood that the invention is not limited to microscopes and may be utilised to produce enlarged exit pupils for other forms of optical instrument or apparatus.

As mentioned hereinbefore, the diffractive element 25 may be a separate element or may be formed integrally with another optical element such as a lens or mirror of the optical apparatus. When the diffractive element is formed integrally with another optical element such as a lens or mirror, the grooves and the lines comprising the diffractive grating are formed on a surface of the other optical element. This may conveniently be effected by depositing a layer of material on a surface of the optical element and then cutting or otherwise forming the grooves in the deposited layer.

It is to be understood that where reference is made in the specification to a lens, mirror or other optical element such element may comprise a single optical element or a compound optical element consisting of a combination of elements.

## Claims

1. An optical instrument including means (1, 2) to produce an optical image to be viewed by an observer at an enlarged exit pupil comprising an array (6) of a plurality of exit pupils (5, 7); the means (25; 32)) to produce the array (6) of the plurality of exit pupils (5, 7) comprising a diffractive element (25) located at an intermediate focal or image plane (3) of the optical instrument
characterised in that the diffractive element (25) comprises a surface (26) of a substrate; a plurality of parallel first grooves (28;33) in said surface (26); a plurality of parallel second grooves (30;35) in said surface of said substrate; said second grooves extending perpendicularly relative to said first grooves; adjacent edges (29;34) of said first grooves being coincident and forming first lines (29;34) of a first optical diffractive grating and adjacent edges (31;36) of said second grooves being coincident and forming second lines (31;36) of a second optical diffractive grating thereby producing the enlarged exit pupil as a two dimensional array of exit pupils.

2. An optical instrument as claimed in claim 1 wherein the first plurality of grooves forming the first optical diffractive grating and the second grooves forming the second optical diffractive grating of the diffractive element are effective to produce the array (6) of exit pupils (5, 7) with the exit pupils spaced apart.

3. An optical instrument as claimed in claim 1 wherein the first plurality of grooves forming the first optical diffractive grating and the second grooves forming the second optical diffractive grating of the diffractive element the diffractive element (25; 32) to produce the enlarged exit pupil are effective to produce the array (6) of the plurality of exit pupils (5, 7) with the exit pupils contiguous and with no overlap and no gaps between adjacent exit pupils.

4. An optical instrument as claimed in any preceding claim wherein the diffractive element (25) is formed on or integrated with a surface of another optical element (22) of the instrument.

5. An optical instrument as claimed in any preceding claim and including an object lens (1) to produce an intermediate image in an image plane (3) of an object in an object plane (4); an eyepiece (2) to produce an exit pupil image (5) at a viewing position of an aperture (8) at the object lens and to produce a magnified image of said intermediate image at said exit pupil (5); and the first and second optical diffractive gratings of the diffractive element (25) are located in said image plane (3) to produce an array (6) of a multiplicity of said exit pupils (5) so located relative to one another as to be perceivable by an eye of an observer of said optical image as a single continuous enlarged exit pupil of greater extent than said exit pupil (5) and said optical image is viewable by the eye of the observer at said continuous enlarged exit pupil.

6. An optical instrument as claimed in claim 1 and including an object lens (10); a first lens (11) to produce an intermediate exit pupil comprising an image of an aperture (14) at the object lens; an optical field system (12, 13) to relay said intermediate exit pupil and an image of an object produced by said object lens and said first lens to a viewing position (16); and the first and second optical diffractive gratings of the diffractive element (25) are located in an image plane (17) in said optical field system to produce at said viewing position an array (6) of a plurality of said intermediate exit pupils relayed thereto by said optical field system.

7. An optical instrument as claimed in claim 6 wherein the optical field system comprises a combination of field lens elements (12, 13).

8. An optical instrument as claimed in claim 7 wherein walls (37,38) of the first and second grooves (28, 31; 33, 35) have a profile effective to distribute light energy substantially uniformly to the exit pupils (7) in the array (6) of exit pupils.

9. An optical instrument as claimed in claim 7 or 8 wherein the first grooves (33) and first lines (34) are formed as a first cylindrical Fresnel lens and the second grooves (35) and second lines (36) are formed as a second cylindrical Fresnel lens perpendicular to said first Fresnel lens.

10. An optical instrument as claimed in claim 6 wherein the optical field system comprises a combination of a field lens element (21) and a reflective element (22).

11. An optical instrument as claimed in claim 6 wherein the optical field system comprises a concave reflective element.

12. An optical instrument as claimed in any one of claims 6 to 11 wherein the diffractive element (25) is formed integrally with a surface of one element (22) of the optical field system.

13. An optical instrument as claimed in any one of claims 5 to 12 wherein the diffractive element (25) comprises an array of a plurality of diffractive sub-elements (27).

14. A diffractive element of an optical instrument comprising a substrate having a surface; a plurality of parallel first grooves (28; 33) in said surface, adjacent edges of said first grooves being coincident and forming first lines (29; 34) of a first optical diffractive grating; a plurality of parallel second grooves (30; 35) in said surface of said substrate, adjacent edges of said second grooves being coincident and forming second lines (31; 36) of a second optical diffractive grating; said diffractive element being characterised by said first lines of said first optical diffractive grating extending perpendicularly relative to said second lines of said second optical diffractive grating.

15. A diffractive element as claimed in claim 14 further characterised in that the first grooves (33) and first lines (34) are formed as a first cylindrical Fresnel lens and the second grooves (35) and second lines (36) are formed as a second cylindrical Fresnel lens perpendicular to said first Fresnel lens.

16. A diffractive element as claimed in claim 14 wherein the substrate is optically transmissive.

## Patentansprüche

1. Optisches Instrument mit Mitteln (1, 2) zum Erzeugen eines optischen Bildes, das von einem Betrachter an einer vergrösserten Austrittspupille zu beobachten ist, welche eine Anordnung (6) einer Mehrzahl von Austrittspupillen (5, 7) enthält, wobei die Mittel (25; 32) zum Erzeugen der Anordnung (6) der Mehrzahl von Austrittspupillen (5, 7) ein in einer Zwischen-Brenn- oder -Bild-Ebene (3) des optischen Instruments angeordnetes Beugungselement (25) enthalten,
dadurch gekennzeichnet, dass das Beugungselement (25) gebildet ist von einer Oberfläche (26) eines Substrates, einer Mehrzahl von parallelen ersten Rillen (28; 33) in der Oberfläche (26), einer Mehrzahl von parallelen zweiten Rillen (30; 35) in der Oberfläche des Substrates, wobei die zweiten Rillen rechtwinklig zu den ersten Rillen verlaufen und wobei benachbarte Kanten (29; 34) der ersten Rillen zusammenfallen und erste Linien (29; 34) eines ersten optischen Beugungsgitters bilden und benachbarte Kanten (31; 36) der zweiten Rillen zusammenfallen und zweite Linien (31; 36) eines zweiten optischen Beugungsgitters bilden, um damit die vergrösserte Austrittspupille als zweidimensionale Anordnung von Austrittspupillen zu erzeugen.

2. Optisches Instrument nach Anspruch 1, in welchem die das erste optische Beugungsgitter bildende erste Mehrzahl von Rillen und die das zweite optische Beugungsgitter des Beugungselementes bildenden zweiten Rillen die Erzeugung der Anordnung (6) von Austrittspupillen (5, 7) mit voneinander beabstandeten Austrittspupillen bewirken.

3. Optisches Instrument nach Anspruch 1, in welchem die das erste optische Beugungsgitter bildende erste Mehrzahl von Rillen und die das zweite optische Beugungsgitter des Beugungselementes bildenden zweiten Rillen die Erzeugung der Anordnung (6) der Mehrzahl von Austrittspupillen (5, 7) mit aneinander angrenzenden Austrittspupillen ohne Ueberlappungen und ohne Spalte zwischen benachbarten Austrittspupillen bewirken.

4. Optisches Instrument nach einem der vorangehenden Ansprüche, in welchem das Beugungselement (25) auf einer Oberfläche eines anderen optischen Elementes (22) des Instrumentes gebildet oder in eine solche Oberfläche integriert ist.

5. Optisches Instrument nach einem der vorangehenden Ansprüche, mit einer Objektivlinse (1) zum Erzeugen eines Zwischenbildes eines in einer Objektebene (4) angeordneten Objekts in einer Bildebene (3), mit einem Okular (2) zum Erzeugen eines Austrittspupillenbildes (5) einer bei der Objektivlinse angeordneten Apertur (8) an einer Beobachtungsstelle und zum Erzeugen eines vergrösserten Bildes des genannten Zwischenbildes in der Austrittspupille (5), wobei das erste und das zweite optische Beugungsgitter des Beugungselementes (25) in der genannten Bildebene (3) angeordnet sind, um eine Anordnung (6) einer Mehrzahl der Austrittspupillen (5) zu erzeugen, welche Austrittspupillen bezüglich einander so liegen, dass sie von einem Auge eines Betrachters des optischen Bildes als eine einzige, zusammenhängende vergrösserte Austrittspupille wahrgenommen werden können, die eine grössere Ausdehnung hat als die Austrittspupille (5), und dass das optische Bild durch das Auge des Betrachters in der genannten zusammenhängenden vergrösserten Austrittspupille beobachtet werden kann.

6. Optisches Instrument nach Anspruch 1, mit einer Objektivlinse (10), mit einer ersten Linse (11) zum Erzeugen einer Zwischen-Austrittspupille, die ein Bild einer bei der Objektivlinse angeordneten Apertur (14) ist, und mit einem optischen Feld-System (12, 13) zum Weiterleiten der Zwischen-Austrittspupille und eines durch die Objektivlinse und die genannte erste Linse erzeugten Bildes eines Objekts zu einer Beobachtungsstelle (16), wobei das erste und das zweite optische Beugungsgitter des Beugungselementes (25) in einer Bildebene (17) in dem optischen Feld-System angeordnet sind, um an der Beobachtungsstelle eine Anordnung (6) einer Mehrzahl der durch das optische Feld-System weitergeleiteten Zwischen-Austrittspupillen zu erzeugen.

7. Optisches Instrument nach Anspruch 6, in welchem das optische Feld-System eine Kombination von Feldlinsenelementen (12, 13) enthält.

8. Optisches Instrument nach Anspruch 7, in welchem Wände (37, 38) der ersten und der zweiten Rillen (28, 31; 33, 35) ein Profil aufweisen, das eine im wesentlichen gleichförmige Verteilung von Lichtenergie auf die Austrittspupillen (7) in der Anordnung (6) von Austrittspupillen bewirkt.

9. Optisches Instrument nach Anspruch 7 oder 8, in welchem die ersten Rillen (33) und die ersten Linien (34) als eine erste zylindrische Fresnel-Linse ausgebildet sind und die zweiten Rillen (35) und zweiten Linien (36) als eine zweite zylindrische Fresnel-Linse ausgebildet sind, die zu der ersten Fresnel-Linse senkrecht steht.

10. Optisches Instrument nach Anspruch 6, in welchem das optische Feld-System eine Kombination eines Feldlinsenelementes (21) und eines reflektierenden Elementes (22) enthält.

11. Optisches Instrument nach Anspruch 6, in welchem das optische Feld-System ein konkaves reflektierendes Element enthält.

12. Optisches Instrument nach einem der Ansprüche 6 bis 11, in welchem das Beugungselement (25) mit einer Oberfläche eines Elementes (22) des optischen Feld-Systems einstückig ausgebildet ist.

13. Optisches Instrument nach einem der Ansprüche 5 bis 12, in welchem das Beugungselement (25) eine Anordnung von beugenden Sub-Elementen (27) enthält.

14. Beugungselement für ein optisches Instrument, mit einem eine Oberfläche aufweisenden Substrat, mit einer Mehrzahl von parallelen ersten Rillen (28; 33) in der Oberfläche, wobei benachbarte Kanten der ersten Rillen zusammenfallen und erste Linien (29; 34) eines ersten optischen Beugungsgitters bilden, und mit einer Mehrzahl von parallelen zweiten Rillen (30; 35) in der Oberfläche des Substrates, wobei benachbarte Kanten der zweiten Rillen zusammenfallen und zweite Linien (31; 36) eines zweiten optischen Beugungsgitter bilden, welches Beugungselement dadurch gekennzeichnet ist, dass die ersten Linien des ersten optischen Beugungsgitters rechtwinklig zu den zweiten Linien des zweiten optischen Beugungsgitters verlaufen.

15. Beugungselement nach Anspruch 14, dadurch gekennzeichnet, dass die ersten Rillen (33) und die ersten Linien (34) als eine erste zylindrische Fresnel-Linse ausgebildet sind und die zweiten Rillen (35) und zweiten Linien (36) als eine zweite zylindrische Fresnel-Linse ausgebildet sind, die zu der ersten Fresnel-Linse senkrecht steht.

16. Beugungselement nach Anspruch 14, in welchem das Substrat optisch durchlässig ist.

## Revendications

1. Instrument optique comportant des moyens (1, 2) pour produire une image optique à observer par un observateur sur une pupille de sortie agrandie comprenant un arrangement (6) d'une pluralité de pupilles de sortie (5, 7), les moyens (25; 32) pour produire l'arrangement (6) de la pluralité de pupilles de sortie (5, 7) comprenant un élément diffractif (25) localisé sur un plan intermédiaire, focal ou image (3), de l'instrument optique, caractérisé en ce que l'élément diffractif (25) comprend une surface (26) d'un substrat; une pluralité de premières rainures parallèles (28; 33) dans ladite surface (26); une pluralité de deuxièmes rainures parallèles (30; 35) dans ladite surface dudit substrat; lesdites deuxièmes rainures s'étendant perpendiculairement auxdites premières rainures; les bords adjacents (29; 34) desdites premières rainures coïncidant et formant des premières lignes (29; 34) d'un premier réseau diffractif optique et les bords adjacents (31; 36) desdites deuxièmes rainures coïncidant et formant des deuxièmes lignes (31; 36) d'un deuxième réseau diffractif optique, produisant ainsi la pupille de sortie agrandie comme un arrangement bidimensionnel de pupilles de sortie.

2. Instrument optique suivant la revendication 1, dans lequel la première pluralité de rainures formant le premier réseau diffractif optique et les deuxièmes rainures formant le deuxième réseau diffractif optique de l'élément diffractif sont à même de produire l'arrangement (6) de pupilles de sortie (5, 7) avec les pupilles de sortie espacées .

3. Instrument optique suivant la revendication 1, dans lequel la première pluralité de rainures formant le premier réseau diffractif optique et les deuxièmes rainures formant le deuxième réseau diffractif optique de l'élément diffractif (25; 32) pour produire la pupille de sortie agrandie sont à même de produire l'arrangement (6) de la pluralité des pupilles de sortie (5, 7) avec les pupilles de sortie contiguës et sans aucun chevauchement ni espace entre les pupilles de sortie adjacentes.

4. Instrument optique suivant l'une quelconque des revendications précédentes, dans lequel l'élément diffractif (25) est formé sur la surface d'un autre élément optique (22) de l'instrument, ou y est intégré.

5. Instrument optique suivant l'une quelconque des revendications précédentes et comprenant une lentille d'objet (1) pour produire une image intermédiaire dans un plan image (3) d'un objet dans un plan objet (4); un oculaire (2) pour produire une image de pupille de sortie (5) à un endroit d'observation d'une ouverture (8) sur la lentille d'objet et pour produire une image agrandie de ladite image intermédiaire sur ladite pupille de sortie (5); et les premier et deuxième réseaux diffractifs optiques de l'élément diffractif (25) sont situés dans ledit plan image (3) pour produire un arrangement (6) d'une multiplicité desdites pupilles de sortie (5) localisées relativement l'une à l'autre de telle sorte qu'elles soient perceptibles par l'oeil de l'observateur de ladite image optique comme une pupille de sortie unique agrandie continue d'une plus grande étendue que ladite pupille de sortie (5), et ladite image optique est observable par l'oeil de l'observateur sur ladite pupille de sortie continue agrandie.

6. Instrument optique suivant la revendication 1 et comportant une lentille d'objet (10); une première lentille (11) pour produire une pupille de sortie intermédiaire comprenant une image d'une ouverture (14) sur la lentille d'objet; un système de champ optique (12, 13) pour relayer ladite pupille de sortie intermédiaire et une image d'un objet produit par ladite lentille d'objet et ladite première lentille vers un endroit d'observation (16); et les premier et deuxième réseaux diffractifs optiques de l'élément diffractif (25) sont localisés dans un plan image (17) dans ledit système de champ optique pour produire, sur ledit endroit d'observation, un arrangement (6) d'une pluralité desdites pupilles de sortie intermédiaires relayées à celui-ci par ledit système de champ optique.

7. Instrument optique suivant la revendication 6, dans lequel le système de champ optique comprend une combinaison d'éléments à lentille de champ (12, 13).

8. Instrument optique suivant la revendication 7, dans lequel les parois (37, 38) des première et deuxième rainures (28, 31; 33, 35) ont un profil à même de distribuer l'énergie lumineuse de manière pratiquement uniforme vers les pupilles de sortie (7) dans l'arrangement (6) des pupilles de sortie.

9. Instrument optique suivant la revendication 7 ou 8, dans lequel les premières rainures (33) et les premières lignes (34) sont formées comme une première lentille de Fresnel cylindrique, et les deuxièmes rainures (35) et les deuxièmes lignes (36) sont formées comme une deuxième lentille de Fresnel cylindrique perpendiculairement à ladite première lentille de Fresnel.

10. Instrument optique suivant la revendication 6, dans lequel le système de champ optique comprend une combinaison d'un élément à lentille de champ (21) et d'un élément réflecteur (22).

11. Instrument optique suivant la revendication 6, dans lequel le système de champ optique comprend un élément réflecteur concave.

12. Instrument optique suivant l'une quelconque des revendications 6 à 11, dans lequel l'élément diffractif (25) est formé d'une pièce avec une surface d'un élément (22) du système de champ optique.

13. Instrument optique suivant l'une quelconque des revendications 5 à 12, dans lequel l'élément diffractif (25) comprend un arrangement d'une pluralité de sous-éléments diffractifs (27).

14. Elément diffractif d'un instrument optique comprenant un substrat présentant une surface; une pluralité de premières rainures parallèles (28; 33) dans ladite surface, les bords adjacents desdites premières rainures coïncidant et formant des premières lignes (29; 34) d'un premier réseau diffractif optique; une pluralité de deuxièmes rainures parallèles (30; 35) dans ladite surface dudit substrat, les bords adjacents desdites deuxièmes rainures coïncidant et formant des deuxièmes lignes (31; 36) d'un deuxième réseau diffractif optique; ledit élément diffractif étant caractérisé par lesdites premières lignes dudit premier réseau diffractif optique qui s'étendent perpendiculairement auxdites deuxièmes lignes dudit deuxième réseau diffractif optique.

15. Elément diffractif suivant la revendication 14, caractérisé en outre en ce que les premières rainures (33) et les premières lignes (34) sont formées comme une première lentille de Fresnel cylindrique, et les deuxièmes rainures (35) et les deuxièmes lignes (36) sont formées comme une deuxième lentille de Fresnel cylindrique perpendiculairement à ladite première lentille de Fresnel.

16. Elément diffractif suivant la revendication 14, dans lequel le substrat est optiquement transmissif.
